# EUROPEAN PATENT APPLICATION

(11) **EP 1 323 755 A1**
(43) Date of publication of application: **02.07.2003**
(21) Application number: 02079931.8
(22) Date of filing: 26.11.2002
(51) Int. Cl.: C08G 18/08, C08G 18/66, C08G 18/76, B29C 33/40

(54) **Composition and method for moulding objects of varying shape such as forms for shoes and the like**

(30) Priority: 20.12.2001 IT MI20012724
(71) Applicant: Negri, Angelo, Vigevano (Pavia) (IT)
(72) Inventor: Negri, Angelo, Vigevano (Pavia) (IT)
(74) Representative: Raimondi, Alfredo, Dott. Ing. Prof.

(57) **Abstract**

Composition for the production of objects of varying shape, comprising:
- a first component A able to define the hardness characteristics of the final composition;
- a second component B able to define the elasticity characteristics of the final composition;
- a third component C able to catalyse the reaction between the components A and B;
- a fourth component D able to absorb the moisture produced by the reaction of the other components of the composition.

## Description

The present invention relates to a composition and a method for the production of objects of varying shape and with predefined mechanical characteristics, in particular forms for shoes.

It is known in the shoe manufacturing sector that shoes are produced using a shaped element - a so-called form - which reproduces the same shape of the finished shoe in the various sizes envisaged. An original model of this form is usually made by the shoe designer and subsequently reproduced in large quantities for use during production.

It is also known that the industrial manufacture of a large number of forms required for the production of shoes is performed using traditional methods which have numerous drawbacks arising from the fact that said forms are made from a rough form obtained by means of injection-moulding and having dimensions much greater than the nominal dimensions envisaged for the finished form.

During subsequent rough-shaping of the form, two protrusions or "humps" facing each other in the longitudinal direction are created, said humps being necessary for the subsequent form finishing steps, which are mostly performed manually and usually comprise: finish-machining, elimination of the humps, a cut for insertion of a hinging element between toe and heel of the form, the mounting of metal reinforcements in the zones where the fitting of nails for fixing the upper is envisaged, the insertion of a manoeuvring sleeve and final surface finishing.

Although widely used, these forms thus manufactured have, however, the drawback that they require a large number of successive operations in order to obtain the finished form, with consequent high production costs, and, even more significantly, with a consequent notable difference between the final dimensions of each form owing to the major imprecision which the manual processing operations inevitably give rise to in the finished product, said differences preventing, among other things, being able to standardise and automate advantageously the subsequent production of the shoe.

The technical problem which is posed, therefore, is that of providing a method which allows the production of forms for shoes in a rapid and low-cost manner and with a high degree of repeatability and precision.

Within the scope of this problem, a further requirement is that the form can be obtained with a smaller number of operations and that the material used for the form has optimum mechanical characteristics, is not harmful for the manufacturer and the user and can be easily disposed of at the end of the working life of the form. These technical problems are solved according to the present invention by a composition for the production of objects of varying shape and with predefined mechanical characteristics, in particular forms for shoes, which comprises:
- a first component A able to define the hardness characteristics of the final composition;
- a second component B able to define the elasticity characteristics of the final composition;
- a third component C able to catalyse the reaction between the components A and B;
- a fourth component D able to absorb the moisture produced by the reaction of the other components of the composition.

A further object of the present invention is to provide a method for moulding objects, in particular forms for shoes, which comprises the steps of:
- preparation of a closed mould formed by two half-moulds connected together and provided with at least one duct for entry of the moulding material and at least one exit hole for the air;
- introduction of a suitable hardening material into the mould;
- hardening of the material inside the mould;
- opening of the mould;
- extraction of the form produced.

Further details may be obtained from the following description of a non-limiting example of embodiment of the invention, provided with reference to the accompanying plates of drawings in which:
- Figure 1 shows a mould for the production of forms for shoes, with the toe form and articulated joint;
- Figure 2 shows a mould for the production of forms for shoes, with the heel form and articulated joint;
- Figure 3 shows a mould for the production of forms for shoes, with the form and inserts for fitting the nails for fixing the undersole;
- Figure 4 shows a mould for the production of forms for shoes, with the heel form and threaded plugs inserted inside it; and
- Figure 5 shows a mould for the production of forms for shoes, with the form and iron plate fitted thereon. The composition according to the present invention for the production of objects, such as forms for shoes which must have predefined mechanical characteristics, comprises four basic components, respectively consisting of:
   a first component A able to define the hardness characteristics of the final composition; this component belongs to the family of polyols and preferably consists of a polyether triol with an average molecular weight of between 120 and 450, and preferably between 210 and 280;
   - a second component B able to define the elasticity characteristics of the final composition; this composition belongs to the family of polyols and preferably consists of a polyether triol with a molecular weight of between 3100 and 6500, and preferably between 4250 and 4950;
   - a third component C able to catalyse the reaction between the components A and B; this component belongs to the family of isocyanates and preferably consists of a diphenylmethane diisocyanate used with a small quantity of polycarbodiimide.
      Alternatively it is also possible to use a formulated diphenylmethane diisocyanate.
   - a fourth component D able to absorb the moisture produced by the reaction of the other components of the composition.

This component belongs to the family of zeolites.

The composition thus obtained is essentially a polyurethane. The component A is for example known commercially by the name VORANOL^{R} CP 260 which is manufactured by Dow Chemical Company and has an average molecular weight 260 and the main technical properties of which are listed below:

| **PROPERTY** | **UNIT OF MEASUREMENT** | **LIMITS** | **METHOD OF MEASUREMENT** |
|---|---|---|---|
| Appearance/ physical state | | liq./visc. | |
| | | | |
| Hydroxyl number | mg KOH/g | 32-37 | ASTM D4274-94d |
| | | | |
| Water, max. | % | 0.060 | ASTM E203-96 |
| | | | |
| Acid number, max. | mg KOH/g | 0.050 | DOWM 100387-TE95A |
| | | | |
| Colour, max. | APHA | 30 | ASTM D4890-93 |
| | | | |
| pH (1 water + 10 methanol) | | 6-8 | DOWM 101495 -TE94A |
| | | | |
| Specific weight, 25/25°C | | 1.021 | |
| | | | |
| Viscosity, 25° | cSt | 790-870 | ASTM D445-94 |
| | | | |
| Viscosity, 37.8C° | cSt | 435 | ASTM D445-94 |
| | | | |
| Flash point, C.O.C. °C | | 240 | |
| | | | |
| CAS# | | 9082-00-2 | |

The component B is for example known commercially by the name VORANOL^{R} CP 4711 which is manufactured by Dow Chemical Company and has an average molecular weight 4700 and the main technical properties of which are listed below:

| **PROPERTY** | **UNIT OF MEASUREMENT** | **LIMITS** | **METHOD OF MEASUREMENT** |
|---|---|---|---|
| Appearance/ physical state | clean, liq./visc. | | |
| | | | |
| Hydroxyl number | mg KOH/g | 647-676 | ASTM D4274-94d |
| | | | |
| Water, max. | % | 0.100 | ASTM E203-96 |
| | | | |
| Acid number, max. | mg KOH/g | 0.050 | DOWM 100387-TE95A |
| | | | |
| Colour, max. | APHA | 30 | ASTM D4890-93 |
| | | | |
| Specific weight, 25/25°C | | 1.050 | |
| | | | |
| pH (1 water + 10 methanol) | | 6-8.5 | DOWM 101495 -TE94A |
| | | | |
| Viscosity, 25° | cSt | 830-980 | ASTM D445-94 |
| | | | |
| Mean molecular weight | | 260 | |
| | | | |
| Flash point, | °C | 180-214 | Pensky Martens closed cup |
| | | | |
| CAS# | | 025791-96-2 | |

The component C is for example known commercially by the name IOSNATE^{R} M 143 which is manufactured by Dow Chemical Company and the main technical properties of which are listed below:

| **TYPICAL PHYSICAL PROPERTIES** | |
|---|---|
| Functional capacity | 2.17 |
| | |
| Physical state at 25 °C | liquid |
| | |
| Colour, Gardner | 6 |
| | |
| Density at 25 °C, g/ml | 1.21 |
| | |
| Vapour pressure at 43°C, mmHG | 10-4 |
| | |
| Boiling point, °C | polymerizes and decomposes at 230 °C with development of CO₂ |
| | |
| Flash point DIN 51758 (Pensky Martens closed cup), °C | 220 |
| | |
| Specific heat, kJ (kgK) | 1.80 |
| | |
| Thermal conductivity, W (m.K.) | 0.13 |
| | |
| Cubic expansion coefficient, 1/K | 0.0009 |
| | |
| Vaporization heat, kJ/kg | 360 |
| | |
| Melting heat, kJ/kg | 136 |
| | |
| Shelf life, maximum | 3 months |
| | |
| Vapour density (air.1) | approx. 8.6 |
| | |
| % extension of volatile substance | nil |

According to a preferred embodiment of the composition, it is envisaged that the percentage sum by weight of the components A+B+D is between 40% and 60% by weight of the final weight of the composition and that the quantity by weight of the catalyst C is correspondingly between 60% an 40% of the final total weight of the composition.

Preferably the formulation consists of a quantity by weight of the components A+B+D equal to 50% of the final composition weight and a corresponding quantity by weight of 50% of catalyst C.

The reaction of the components is moreover preferably obtained at an ambient temperature of between 20 and 32 °C, it being envisaged that once the reaction temperature has been defined it is kept constant.

With a composition as described above it is possible to obtain objects, and in particular forms for shoes, with variable mechanical properties of hardness and elasticity, depending on the percentage quantity by weight of the two products A and B, the respective quantities of which may vary individually from 25% to 60% by weight and in a complementary manner relative to 50% of the overall weight of A+B+D.

In this way, while maintaining the overall percentages of the components A+B+D and C as described above, different mechanical characteristics of the finished product may be determined.

It is envisaged, moreover, that the specific fillers such as pigments and/or accelerators may be added to the composition.

The latter, interacting with the different quantities of product C, determine a reaction time which is variable between 15 seconds and 20 minutes.

Preferably, a time of between 8 minutes and 20 minutes will be used in order to obtain a high production speed, while maintaining at the same time a high quality of the finished product.

In this case, an example of a formulation of the composition envisages that the latter comprises:
30% of component A (polyol)
16% of component B (polyol)
3% of component D (zeolite)
*q.s.* of pigment
*q.s.* of accelerator
50% of component C (catalyst)

According to the present invention, the composition described above is used in a method for the moulding of objects, such as for example forms for shoes, which envisages the following steps:
- preparation of a closed mould formed by two half-moulds 10,20 connected together and provided with at least one duct for entry of the moulding material and at least one exit hole for the air;
- introduction of a suitable hardening material according to the invention into the mould;
- hardening of the material inside the mould;
- opening of the mould;
- extraction of the form produced.

In preferred modes of implementation of the method, it is envisaged that the hardening material according to the present invention is introduced into the mould by means of low-pressure injection, preferably at a pressure of between 1 and 2 bar and an ambient temperature of between 20°C and 32°C, which is kept constant during moulding.

The speed of injection is between 3 and 25 seconds, while the hardening speed may be between 15 seconds and 20 minutes and preferably between 8 and 20 minutes.

It is envisaged moreover that the hardening material consists of a composition which comprises four basic components respectively consisting of:
- a first component A able to define the hardness characteristics of the final composition; this component belongs to the family of polyols and preferably consists of a polyether triol with a molecular weight of between 120 and 450 and preferably between 210 and 280;
- a second component B able to define the elasticity characteristics of the final composition.
   This component belongs to the family of polyols and preferably consists of a polyether triol with an average molecular weight of between 3100 and 6500 and preferably between 4250 and 4959;
- a third component C able to catalyse the reaction between the components A and B; this component belongs to the family of isocyanates and preferably consists of a diphenylmethane diisocyanate used with a smaller quantity of polycarbodiimide;
- a fourth component D able to absorb the moisture produced by the reaction of the other components of the composition.

The composition envisages formulations such as that described above.

The present invention also relates to an object produced with a chemical composition described above; in particular this object is a form used in the shoe manufacturing sector for the production of shoes and the like.

In particular it has been established experimentally that with the method and the composition described above it is possible to obtain shoe forms with optimum mechanical properties and a high degree of surface finish, with shorter production times and costs significantly lower than those of the conventional art. In addition, the further advantage is obtained that the forms are all identical to each other and have very small dimensional tolerances.

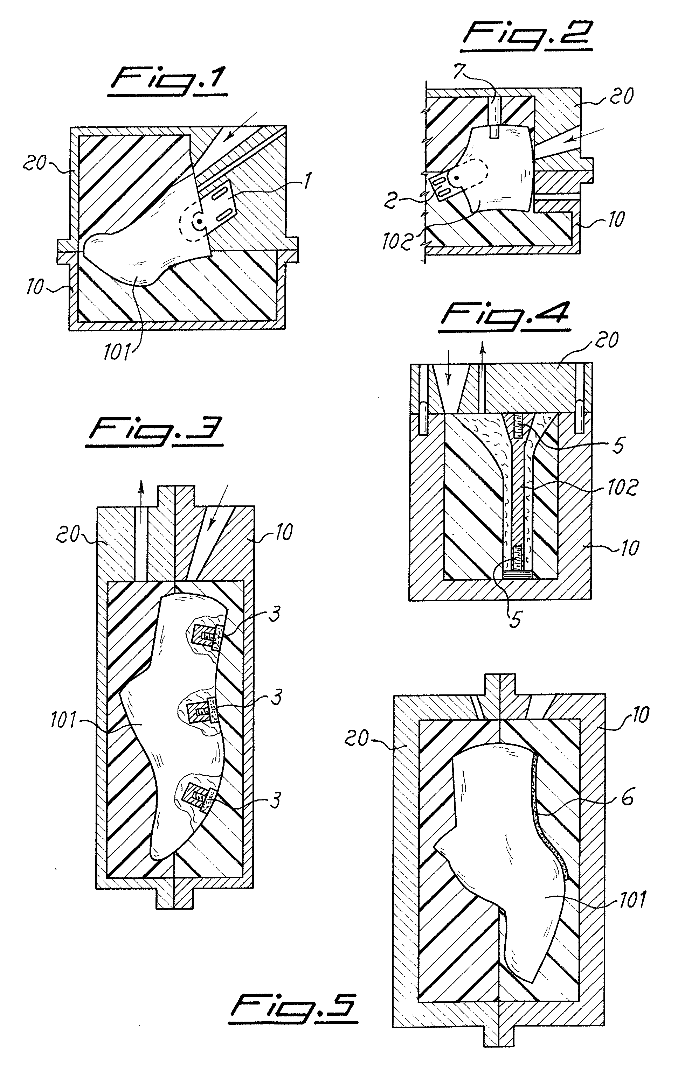

As illustrated in Figs. 1,2,3,4 and 5 it is also possible to provide, with the single moulding step described, forms 100 which, upon completion of moulding, already have all those accessories envisaged for the subsequent shoe production steps; examples of these accessories are:
- an articulated joint 1,2 between toe 101 and heel 102 of the form (Figs. 1 and 2);
- sleeves 7 (Fig. 2) used for handling the shoes during the various steps for processing thereof;
- inserts 3 able to allow the fitting of nails for fixing the undersole to the upper;
- female-screw elements 5 inserted into the heel 102 (Fig. 4) for facilitating fixing/replacement of the heel on the shoe or the fitting/replacement of the rubber heel protection piece which must be changed periodically as a result of wear;
- iron fittings 6 (Fig. 5) able to allow riveting of nails during assembly of the shoe.

## Claims

1. Composition for the production of objects of varying shape, comprising:
- a first component A able to define the hardness characteristics of the final composition;
- a second component B able to define the elasticity characteristics of the final composition;
- a third component C able to catalyse the reaction between the components A and B;
- a fourth component D able to absorb the moisture produced by the reaction of the other components of the composition.

2. Composition according to Claim 1, in which said component A belongs to the family of polyols.

3. Composition according to Claim 2, in which said component A preferably consists of a polyether triol with an average molecular weight of between 120 and 450.

4. Composition according to Claim 3, in which said molecular weight is preferably between 210 and 280.

5. Composition according to Claim 1, in which said component B belongs to the family of polyols.

6. Composition according to Claim 5, in which said component B preferably consists of a polyether triol with an average molecular weight of between 3100 and 6500.

7. Composition according to Claim 6, in which said molecular weight is preferably between 4350 and 4850.

8. Composition according to Claim 1, in which said component C belongs to the family of isocyanates.

9. Composition according to Claim 8, in which said component C preferably consists of a diphenylmethane diisocyanate used with a smaller quantity of polycarbodiimide.

10. Composition according to Claim 8, in which said component C preferably consists of a formulated diphenylmethane diisocyanate.

11. Composition according to Claim 1, in which said component D belongs to the family of zeolites.

12. Composition according to Claim 1 which comprises between 40% and 60% by weight of component C.

13. Composition according to Claim 12 which comprises between 60% and 40% of components A,B,D mixed together.

14. Composition according to Claim 13, in which the component A is preferably between 12.5% and 30% of the final weight of the composition.

15. Composition according to Claim 14, in which the component B is preferably between 30% and 12.5 % of the final weight of the composition.

16. Composition according to Claim 1, comprising additives.

17. Composition according to Claim 16, in which said additive is a pigment.

18. Composition according to Claim 16, in which said additive is an accelerator.

19. Composition according to Claim 16, in which said additives are between 0.2% and 2% of the total weight of the composition.

20. Composition according to Claim 19 which comprises:
30% of component A (polyol)
16% of component B (polyol)
3% of component D (zeolite)
*q.s.* of pigment
*q.s.* of accelerator
50% of component C (catalyst)

21. Composition according to Claim 1, in which the catalysation time is between 15 seconds and 25 minutes.

22. Composition according to Claim 18, in which the catalysation time is preferably between 8 and 20 minutes.

23. Use of a composition according to the preceding claims for moulding objects of varying shape.

24. Object of varying shape, **characterized in that** it is produced with a composition according to Claim 1.

25. Object according to Claim 24, **characterized in that** it is a form for the production of shoes.

26. Moulding method for the production of objects of varying shape, comprising the following steps:
- preparation of a closed mould formed by two half-moulds connected together and provided with at least one duct for entry of the moulding material and at least one exit hole for the air;
- introduction of a suitable hardening material into the mould;
- hardening of the material inside the mould;
- opening of the mould;
- extraction of the form produced.

27. Method according to Claim 26, in which the hardening material is introduced into the mould by means of injection.

28. Method according to Claim 27, in which the injection pressure is between 1 and 2 bar.

29. Method according to Claim 26, in which the injection temperature is kept constant at an ambient temperature of between 20°C and 32°C.

30. Method according to Claim 26, in which the injection speed is between 3 seconds and 25 seconds.

31. Method according to Claim 26, in which the hardening speed is between 15 seconds and 20 minutes.

32. Method according to Claim 31, in which said hardening speed is preferably between 8 and 16 minutes.

33. Method according to Claim 26, in which the hardening material is a composition comprising:
- a first component A able to define the hardness characteristics of the final composition;
- a second component B able to define the elasticity characteristics of the final composition;
- a third component C able to catalyse the reaction between the components A and B;
- a fourth component D able to absorb the moisture produced by the reaction of the other components of the composition.

34. Method according to Claim 33, in which said component A belongs to the family of polyols.

35. Method according to Claim 34, in which said component A preferably consists of a polyether triol with an average molecular weight of between 3100 and 6500.

36. Method according to Claim 33, in which said component B belongs to the family of polyols.

37. Method according to Claim 36, in which said component B preferably consists of a polyether triol with an average molecular weight of between 3100 and 6500.

38. Method according to Claim 33, in which said component C belongs to the family of isocyanates.

39. Method according to Claim 38, in which said component C preferably consists of a diphenylmethane diisocyanate used with a smaller quantity of polycarbodiimide.

40. Method according to Claim 38, in which said component C consists of a formulated diphenylmethane diisocyanate.

41. Method according to Claim 33, in which said component D belongs to the family of zeolites.

42. Method according to Claim 33, in which said composition comprises between 40% and 60% by weight of component C.

43. Method according to Claim 41, in which said composition comprises between 60% and 40% of components A,B,D mixed together.

44. Method according to Claim 43, in which the component A is preferably between 12.5% and 30% of the final weight of the composition.

45. Method according to Claim 43, in which the component B is preferably between 30% and 12.5% of the final weight of the composition.

46. Method according to Claim 33, in which said composition comprises at least one additive.

47. Method according to Claim 46, in which said additive is an accelerator.

48. Method according to Claim 47 which comprises:
30% of component A (polyol)
16% of component B (polyol)
3% of component D (zeolite)
*q.s.* of pigment
*q.s.* of accelerator
50% of component C (catalyst)
